(19) **Europäisches Patentamt**
**European Patent Office**
**Office européen des brevets**

(11) **EP 4 505 874 A1**

(12) **EUROPEAN PATENT APPLICATION**

(43) Date of publication:
**12.02.2025 Bulletin 2025/07**

(21) Application number: **23315312.1**

(22) Date of filing: **11.08.2023**

(51) International Patent Classification (IPC):
**A01N 25/08** (2006.01)    **A01N 25/10** (2006.01)
**A01N 25/34** (2006.01)    **A01P 1/00** (2006.01)
**G06K 19/06** (2006.01)    **A45C 11/18** (2006.01)

(52) Cooperative Patent Classification (CPC):
**A01N 25/34; A01N 25/08; A01N 25/10;**
**A45C 11/182; G06K 19/06**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Thales**
**92400 Courbevoie (FR)**

(72) Inventors:
• **Guillemet, Raphaël**
**92400 COURBEVOIE (FR)**

• **Garabedian, Patrick**
**92400 COURBEVOIE (FR)**
• **Bansropun, Shailendra**
**92400 COURBEVOIE (FR)**
• **Quendt, Bernhard**
**92400 COURBEVOIE (FR)**

(74) Representative: **Castelo, Jérôme**
**Thales Dis France SAS**
**Intellectual Property Department**
**6, rue de la Verrerie**
**92190 Meudon (FR)**

(54) **ANTIMICROBIAL SURFACES AND METHOD OF MAKING THE SAME**

(57)    An antimicrobial deformable element (500) and method (800) of making same can include a core layer (508), at least a first surface layer (507) made of piezoelectric materials applied above the core layer, and a doped diamond layer (501a) applied to at least the first surface layer, where the doped diamond layer forms a plurality of rough nanostructured structures forming a plurality of electrodes (504) and counter-electrodes (502) on at least the first surface layer to provide antimicrobial effects from the material structure itself and from a voltage (or current) generated from a deformation of the antimicrobial deformable element. The voltage difference will typically occur between different rough nanostructured structures having different polarity upon deformation of the deformable element. Such deformation can be bending of a card, but other deformation causing a current or voltage is within contemplation of the embodiments.

FIG. 5A

FIG. 5B

# EP 4 505 874 A1

## Description

### CROSS-REFERENCE TO RELATED APPLICATIONS

Not applicable.

### TECHNICAL FIELD

The present disclosure generally relates to antimicrobial surfaces. More particularly, but not exclusively, the present disclosure relates to antimicrobial surfaces as applied to cards and other surfaces using rough nanostructures capable of generating a voltage upon deformation of the surface.

### BACKGROUND

All of the subject matter discussed in the Background section is not necessarily prior art and should not be assumed to be prior art merely as a result of its discussion in the Background section. Along these lines, any recognition of problems in the prior art discussed in the Background section or associated with such subject matter should not be treated as prior art unless expressly stated to be prior art. Instead, the discussion of any subject matter in the Background section should be treated as part of the inventor's approach to the particular problem, which, in and of itself, may also be inventive.

There continues to be considerable interest in reducing the transfer of microbes and illnesses between people due in part to *E. coli* outbreaks, viral transfer such as norovirus, antibiotic resistant bacteria, and of course, Covid-19. Consequently, the market has been flooded with antimicrobial household products containing germ-killing ingredients. However, these materials only provide a temporary effect and are prone to becoming less effective over time as a result of reduced concentrations of antimicrobial agents.

Historically, these antimicrobial effects have been delivered through conventional additives such as fungicides or bactericides, however, such additives are used in small amounts and are typically added after manufacture, and end up being indiscriminately distributed onto the surface. These additives can be lost over time due to leaching and degradation resulting from exposure to light, heat and the environment. In addition, these additives are not used on all materials and in fact are not present in many items that are routinely passed from person to person. As a result, items that are passed from person to person are more susceptible to microbe transfer.

In addition, numerous transactions and access to buildings, facilities, transportation, and other uses require the use of cards numerous times a day (e.g., as a form of payment or as identification). As a result, these cards are in contact with numerous people (e.g., cashier, manager, attendant, etc.) and devices that have also been in contact with numerous other individuals. This allows the transfer of a wide variety of substances, (e.g., food, microbes, viruses, drinks, bacteria, fungus, spores, and other materials) and provides a mechanism for cross contamination of various microbes from person to person and place to place. Yet for the most part, card users do not realize that these cards can be the source of an illness. Even if they do, they are reluctant to clean or disinfect these cards for fear the cleaner or disinfectant will damage the card.

US Patent No. 7851517 granted on December 14, 2010 by Lisa Marie Holmes, discloses a system, method and apparatus that provides an antimicrobial card, badge holder or token made from an antimicrobial polymereric material. The antimicrobial polymereric material includes one or more polymers and one or more antimicrobial agents that affect the growth of bacteria, fungi, virus or a combination thereof. Although the Holmes patent overcomes some of the detriments described above, the effectiveness of such antimicrobial materials may still wane over time.

### SUMMARY

In some embodiments, an antimicrobial deformable element can include a core layer, at least a first surface layer made of piezoelectric materials applied above the core layer, and a doped diamond layer applied to at least the first surface layer, where the doped diamond layer forms a plurality of rough nanostructured structures forming a plurality of electrodes and counter-electrodes on at least the first surface layer to provide antimicrobial effects from the material structure itself and from a voltage (or current) generated from a deformation of the antimicrobial deformable element. The voltage difference will typically occur between different rough nanostructured structures having different polarity upon deformation of the deformable element. Such deformation can be bending of a card.

In some embodiments, the doped diamond layer forms the rough nanostructured structures having aspect ratios in the range of 1/5 - 1/10.

In some embodiments, the doped diamond layer has a significant roughness with regard to a periodicity of each of the rough nanostructured structures of the plurality of rough nanostructured structures to provide an antimicrobial property.

In some embodiments, the antimicrobial deformable element is a card further includes at least a second surface layer made of piezoelectric materials applied below the core layer. In some embodiments, the antimicrobial deformable element further includes a doped diamond layer applied to at least the second surface layer, where the doped diamond layer applied to at least the second surface layer forms a plurality of rough nanostructured structures forming a plurality of electrodes and counter-electrodes on at least the second surface layer to provide antimicrobial effects from the material structure itself and from a voltage (or current) generated from a deformation of the antimicrobial deformable element.

In some embodiments, the piezoelectric materials are made from one or more of PZT, AIN, ZnO, or PVDF.

In some embodiments, the doped diamond layer is arranged and configured to exhibit great resistance to abrasion and high bioinertia.

In some embodiments, the core layer is made from one or more of polycarbonate, styrene, polyvinyl chloride, or laminated polyvinyl chloride.

In some embodiments, the core layer is made from an antimicrobial polymeric material including one or more polymers and one or more antimicrobial agents that affect the grown of bacterial, fungi, viruses or any combination thereof on the antimicrobial deformable element.

In some embodiments, the doped diamond layer applied to at least the first surface layer serves as the plurality of electrodes and counter-electrodes according to an interdigitated comb structure having a space no greater than 5 $\mu$m between digits of the electrodes.

In some embodiments, the doped diamond layer forms the plurality of rough nanostructured structures is made of a black silicon type of material.

In some embodiments, the doped diamond layer is doped with p-type (Boron, Hydrogen) or n-type (Phosphorus, Nitrogen) dopants in order to make the diamond layer conductive.

In some embodiments, the doped diamond layer applied to at least the first surface layer exhibits self-cleaning properties when soiled by a biological liquid, or one at least liquid containing electrolytes and when the voltage is generated from the deformation of the antimicrobial card due to activation of the piezoelectric materials passing a current.

In some embodiments, the antimicrobial deformable element can include an identification card, passport, a credit card, a debit card, an insurance card, a transaction card, ATM card, a Supermarket card, a club card, a lost and found key chain program card, a library card, a health club card, a membership card, a rental car loyalty programs card, a hotel loyalty programs card, a prepaid phone card, an access card, an identification card, a driver's license, a firearm license, a physical access security card, a mini-card, a security card, a stored value card, a vendor-specific card, a mobile phone cover, a mobile phone case, a laptop cover, a laptop case, a watch band, a temple for a pair of glasses, a frame for a pair of glasses, a handle for carry case, or any combination thereof.

In some embodiments, an antimicrobial card can include a core layer, a first surface layer made of piezoelectric materials applied above the core layer, a second surface layer made of piezoelectric materials applied below the core layer, and a doped diamond layer applied to at least the first surface layer and the second surface layer, wherein the doped diamond layer forms a plurality of rough nanostructured structures forming a plurality of electrodes and counter-electrodes on at least the first surface layer and the second surface layer to provide antimicrobial effects from the material structure itself and from a voltage generated from a deformation of the antimicrobial card.

In some embodiments, a method of manufacturing an antimicrobial card can include the steps of providing a core layer, applying a first surface layer made of piezoelectric materials above the core layer, applying a second surface layer made of piezoelectric materials below the core layer, and applying a doped diamond layer to at least the first surface layer and the second surface layer, wherein the doped diamond layer forms a plurality of rough nanostructured structures forming a plurality of electrodes and counter-electrodes on at least the first surface layer and the second surface layer to provide antimicrobial effects from the material structure itself and from a voltage generated from a deformation of the antimicrobial card.

**BRIEF DESCRIPTION OF THE DRAWINGS**

Non-limiting and non-exhaustive embodiments are described with reference to the following drawings, wherein like labels refer to like parts throughout the various views unless otherwise specified. The sizes and relative positions of elements in the drawings are not necessarily drawn to scale. For example, the shapes of various elements are selected, enlarged, and positioned to improve drawing legibility. The particular shapes of the elements as drawn have been selected for ease of recognition in the drawings. One or more embodiments are described hereinafter with reference to the accompanying drawings in which:

FIG. 1 illustrates a structure of black silicon having a plurality of rough nanostructured structures or "spikes" in accordance with the embodiments;

FIG. 2 illustrates the black silicon structure of FIG. 1 further coated with a conformal diamond deposit to obtain black diamond also having a plurality of rough nanostructured structures in accordance with the embodiments;

FIG. 3 illustrates a dead bacteria pierced by the nanostructures of the black diamond of FIG. 2 in accordance with the embodiments;

FIG. 4 illustrates a voltage generated by a piezoelectric layer as a function of distance "d" between electrodes in accordance with the embodiments;

FIG. 5A illustrates a card having rough nanostructures capable of generating a voltage upon deformation of the surface in accordance with the embodiments;

FIG. 5B is an exploded view of the card of FIG. 5A in accordance with the embodiments; and

FIG. 6 is a flow chart illustrating a method of manufacturing an antimicrobial card in accordance with the embodiments.

## DETAILED DESCRIPTION

In the following description, certain specific details are set forth in order to provide a thorough understanding of various disclosed embodiments. However, one skilled in the relevant art will recognize that embodiments may be practiced without one or more of these specific details, or with other methods, components, materials, etc. Also in these instances, well-known structures may be omitted or shown and described in reduced detail to avoid unnecessarily obscuring descriptions of the embodiments.

The embodiments relate to the development of antimicrobial surfaces on plastic cards or other devices used in everyday life (identity cards, passports, credit cards, company ID passes, hotel key cards, mobile phone cases, case handles, etc.) and which are potentially vectors of microbes and viruses when they are exchanged between individuals.

The embodiments give the surfaces of these items antimicrobial and self-cleaning properties using the technological methods used in the field of microelectronics, material science, and further possibly also take advantage of other existing chemical technologies.

Most anti-bacterial solutions are based on the use of copper and its alloys, that are naturally antimicrobial, polymers with antimicrobial agents, nanomaterials or nanoparticles or materials that are based on the use of the photo-catalytic properties of $TiO_2$. These solutions have disadvantages, such as their durability, their mechanical resistance, their toxicity, or even the need to use external sources of energy such as UV light in the case of $TiO_2$. In addition, the growing resistance of bacteria to these biocides poses an ongoing problem.

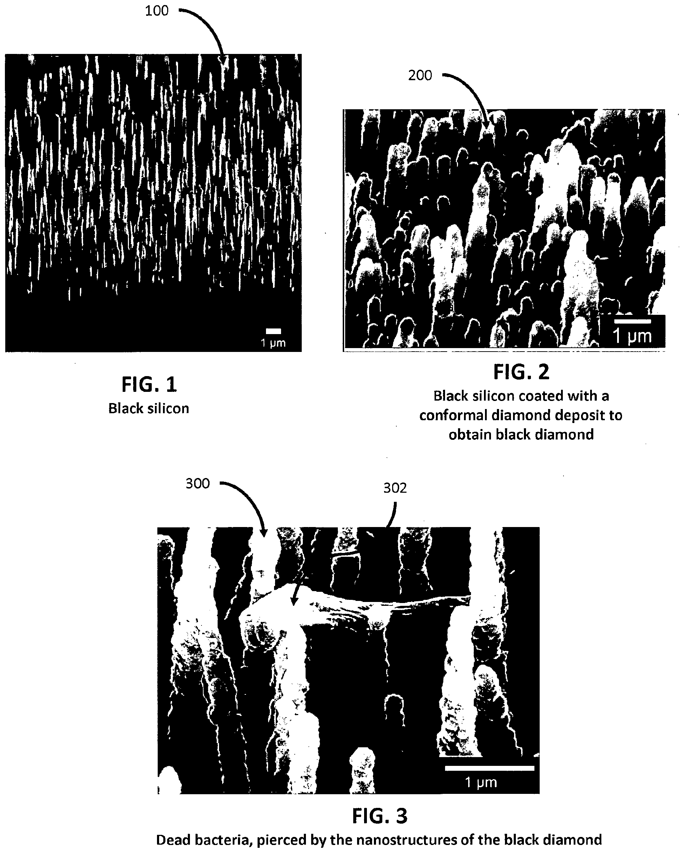

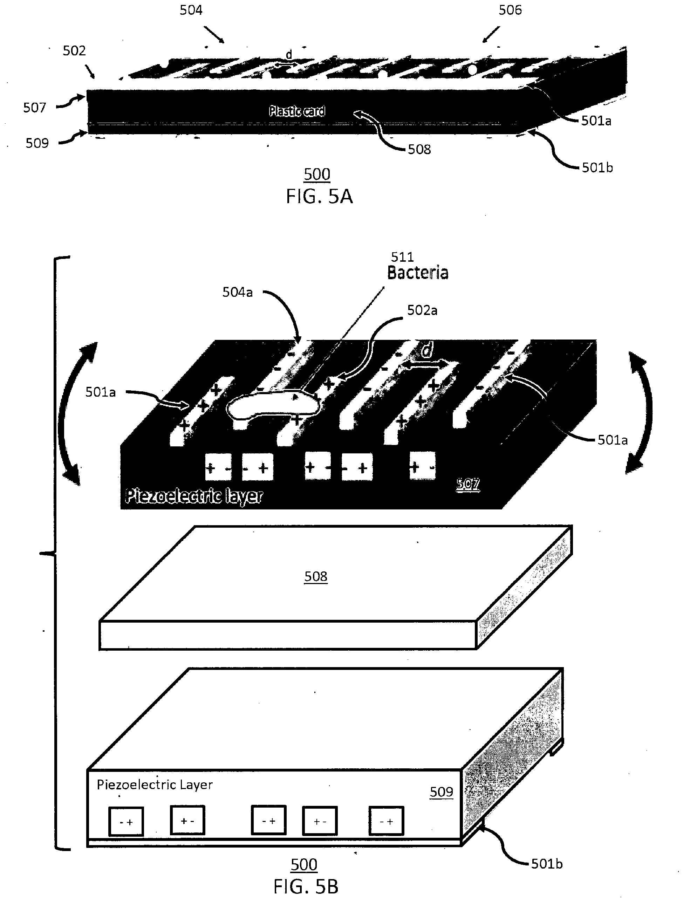

The embodiments herein overcomes these problems by using as an anti-bacterial layer a thin film of doped diamond as shown in the structure 200 of FIG. 2, which exhibits great resistance to abrasion and total bioinertia, and has a nanostructuring similar to the structure 100 of black silicon as shown in FIG. 1, making it possible to thus obtain a long-lasting antimicrobial property already demonstrated as illustrated by the dead bacteria 302 pierced by the nanostructures 300 of the black diamond in FIG. 3. The novelty of the embodiments is based on the use of a thin piezoelectric film as shown in FIGs. 5A and 5B present under the diamond layer. Simple bending movement or other deformation of the item would allow the appearance of a current which would polarize the diamond electrode, thus promoting the destruction of bacteria. Indeed, a weak electric current has a proven bactericidal effect. Moreover, the electrodes of doped diamond, once polarized, have a self-cleaning property if soiled with a liquid having an electrolyte.

Furthermore, a surface functionalization step, such as silanization, in order to give the nanostructured diamond electrodes a superhydrophobic property, would allow the surface of the item to further increase its antimicrobial potential

It is known that nanostructured materials of the "black silicon" type, having a significant roughness with regard to the periodicity of the nanostructures (structures with aspect ratios 1/5 - 1/10), have antibacterial properties. The effect is purely mechanical and independent of the chemical composition of the surface such that being pierced by the nanostructures of the nanostructured materials immediately kills most of the bacteria that try to land on the surface. Structures of the same type, and therefore the same behavior and inspiring some of the embodiments herein, can be found on the wings of the butterfly D. *bipunctata.* Dunseath et al. have shown that the antibacterial character of black diamond, obtained by a conformal deposit of diamond on black silicon as illustrated by FIGs 1-3.

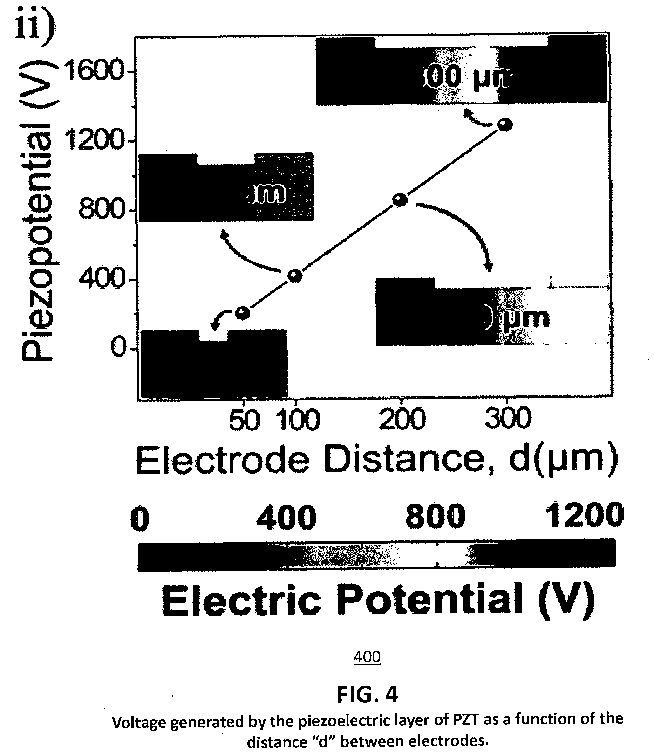

In addition, it has been shown that an electric current of a few tens of microamperes had a strong bactericidal effect, causing the complete or partial destruction of the bacterial membrane. FIG. 4 illustrates a voltage generated by a piezoelectric layer of PZT as a function of the distance "d" between electrodes.

The novelty of the embodiments consists of combining the antimicrobial properties obtained by different mechanisms of the two ways described above based on structure and secondly on electronics (more particularly, nanostructuring and use of an electric current). The electric current is obtained by means of a thin piezoelectric film, underlying the thin film of doped black diamond, and activated by the simple bending of the item. The piezoelectric layer used can be PZT such as that produced by a team at the Korea Advanced Institute of Science and Technology (KAIST) on a flexible substrate and which provides an electrical signal of up to 150 $\mu$A from very low deformation.. Other materials are conceivable, such as AlN, ZnO, PVDF, etc.

In the configuration proposed as shown in the card 500 of FIGs. 5A and 5B, the piezoelectric property is used according to a $d_{33}$ mode of piezoelectric material operation where one or more piezoelectric layers 507, 509 are used one or more sides of a core layer 508 such as a polycarbonate or plastic card layer. The thin film of black diamond in some of the embodiments acts as an electrode 502 and a counter-electrode 504 according to an "interdigitated comb" architecture. The space "$d$" between the digits 504a and 502a as shown in FIG. 5B of the electrodes must be, at most, the same dimension as a bacterium (5 $\mu$m) so that the latter (bacterium) is in contact with the two electrodes (of opposing polarity) simultaneously and so that a current passes through it once the piezoelectric layer is activated by bending or other deformation. Bending as shown by the direction of the arrows in FIG. 5B will likely provide the best voltage generation when in the $d_{33}$ mode.

The voltage V generated in open circuit when a piezo layer is deformed by stress $\sigma$ is provided by the equation:

$$V \ (V) = \sigma \ (kg.m\text{-}1.s\text{-}2) \ x \ g_{33}(V.m/N) \ x \ d \ (m)$$

Where $g_{33}$ is the piezoelectric voltage constant $(d_{33}/\varepsilon)$.

While the method used can be the same as Park et al. (PZT layer 2 $\mu$m thick, of the same quality as described in the article and deposited by transfer via laser lift-off), the voltage generated with an interelectrode distance d = 5 $\mu$m is 20 V (FIG. 4) for a small PZT area (1.5x1.5 cm$^2$) and a deformed shape with a radius of curvature of 1.6 cm. The stress exerted in this case is high for a PCB but can be compensated by a larger piezoelectric layer area. The current obtained will be a function of the electrical resistance between the two electrodes, soiled by any liquid or a bacterial biofilm.

In any case, more precise sizing calculations (dimensions of the piezo layer, dimensions of the electrodes, etc.) will be necessary to implement and provide more accurate measurements in accordance with the embodiments.

Although there can be embodiments that just use nanostructures and electrical property on a single surface, the double-sided surfaces of the everyday item such as a card will then ultimately have antimicrobial properties due to the surface roughness of black diamond where the antimicrobial properties are reinforced when a current can be established between the electrode and the counter-electrode via piezoelectric activation. Such an arrangement can also have self-cleaning properties, provided that the item in question is soiled by a biological liquid or a fluid having at least electrolytes, and provided that the piezoelectric activation makes it possible to pass a current.

The combination of these properties has never been achieved on a surface of an item.

Furthermore, the doped diamond used to make the electrodes makes it possible to obtain good mechanical resistance, in particular to abrasion, which makes it possible to provide a long-lasting solution to the problem. The solution proposed is also bio-inert.

Finally, a surface functionalization 506, such as that carried out silanization, gives the nanostructured diamond electrodes a superhydrophobic property (contact angle defined by the Cassie-Baxter law greater than 150°), and would allow the surface of the item to further increase its antimicrobial potential.

In some embodiments as shown by FIG. 5A and 5B, an antimicrobial deformable element 500 can include a core layer 508, at least a first surface layer 507 made of piezoelectric materials applied above the core layer 508, and a doped diamond layer 501a applied to at least the first surface layer 508, where the doped diamond layer forms a plurality of rough nanostructured structures forming a plurality of electrodes 504 and counter-electrodes 502 on at least the first surface layer 508 to provide antimicrobial effects from the material structure itself and from a voltage (or current) generated from a deformation of the antimicrobial deformable element. The voltage difference will typically occur between different rough nanostructured structures having different polarity upon deformation of the deformable element. Such deformation can be bending of a card, but other deformation causing a current or voltage is within contemplation of the embodiments.

In some embodiments, the doped diamond layer forms the rough nanostructured structures having aspect ratios in the range of 1/5 - 1/10.

In some embodiments, the doped diamond layer has a significant roughness with regard to a periodicity of each of the rough nanostructured structures of the plurality of rough nanostructured structures to provide an antimicrobial property as shown in FIGs. 2 and 3.

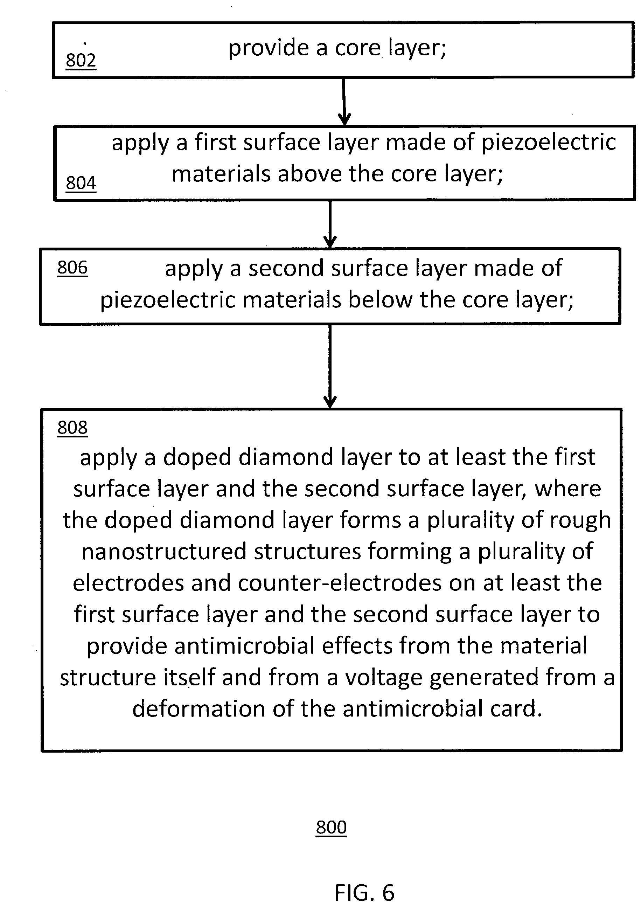

In some embodiments, the antimicrobial deformable element is a card 500 or 600 as shown in FIGs 5A, 5B, and 6 that further includes at least a second surface layer 509 made of piezoelectric materials applied below the core layer 508. In some embodiments, the antimicrobial deformable element further includes a doped diamond layer 501b applied to at least the second surface layer 509, where the doped diamond layer 501b applied to at least the second surface layer 509 forms a plurality of rough nanostructured structures forming a plurality of electrodes and counter-electrodes (not shown) on at least the second surface layer 509 to provide antimicrobial effects from the material structure itself and from a voltage (or current) generated from a deformation of the antimicrobial deformable element. The electrodes and counter-electrodes would be similar to the ones shown on the first surface layer 507.

In some embodiments, the piezoelectric materials in layers 507 or 509 or both can be made from one or more of PZT, AIN, ZnO, or PVDF.

In some embodiments, the doped diamond layer (501a or 501b or both) is arranged and configured to exhibit great resistance to abrasion and high bioinertia.

In some embodiments, the core layer 508 is made from one or more of polycarbonate, styrene, polyvinyl chloride, or laminated polyvinyl chloride. Other forms of plastics and additional layers are contemplated within the embodiments, but a few are shown to simplify the concepts being claimed.

In some embodiments, the core layer 508 is made from an antimicrobial polymeric material including one or more polymers and one or more antimicrobial agents that affect the growth of bacterial, fungi, viruses or any combination thereof on the antimicrobial deformable element.

In some embodiments, the doped diamond layer 501a applied to at least the first surface layer 507 serves as the plurality of electrodes 504 and counter-electrodes 502 according to an interdigitated comb structure having a space no greater than 5 $\mu$m between digits of the electrodes.

In some embodiments, the doped diamond layer 501a or 501b or both forms the plurality of rough nanostructured structures that is made of a black silicon type of material.

In some embodiments, the doped diamond layer 501a applied to at least the first surface layer.507 exhibits self-cleaning properties when soiled by a biological liquid, or one at least liquid or fluid containing electrolytes and when the voltage is generated from the deformation of the antimicrobial card due to activation of the piezoelectric materials passing a current.

In some embodiments, the antimicrobial deformable element can include an identification card, passport, a credit card 600 (as shown in FIG. 6), a debit card, an insurance card, a transaction card, ATM card, a Supermarket card, a club card, a lost and found key chain program card, a library card, a health club card, a membership card, a rental car loyalty programs card, a hotel loyalty programs card, a prepaid phone card, an access card, an identification card, a driver's license, a firearm license, a physical access security card, a mini-card, a security card, a stored value card, a vendor-specific card, a mobile phone cover, a mobile phone case, a laptop cover, a laptop case, a watch band, a temple for a pair of glasses, a frame for a pair of glasses, a handle for carry case, or any combination thereof.

In some embodiments as shown in FIG. 5A, an antimicrobial card 500 can include a core layer 508, a first surface layer 507 made of piezoelectric materials applied above the core layer 508, a second surface layer 509 made of piezoelectric materials applied below the core layer 508, and a doped diamond layer 501a and 501b applied to at least the first surface layer 507 and the second surface layer 509 respectively, where the doped diamond layer forms a plurality of rough nanostructured structures forming a plurality of electrodes 504 and counter-electrodes 502 on at least the first surface layer 507 and the second surface layer 509 to provide antimicrobial effects from the material structure itself and from a voltage generated from a deformation of the antimicrobial card 500.

In other words, in some embodiments as shown in FIG. 5A, the antimicrobial deformable element is an antimicrobial card, said antimicrobial card comprising a second surface layer made of piezoelectric materials applied below the core layer, the doped diamond layer being applied also to the second surface layer, the plurality of rough nanostructured structures forming a plurality of electrodes and counter-electrodes being formed also on the second surface layer.

In some embodiments as further illustrated by the flow chart in FIG. 6, a method 800 of manufacturing an antimicrobial card can include the steps of providing at 802 a core layer, applying at 804 a first surface layer made of piezoelectric materials above the core layer, applying 806 a second surface layer made of piezoelectric materials below the core layer, and applying 808 a doped diamond layer to at least the first surface layer and the second surface layer, where the doped diamond layer forms a plurality of rough nanostructured structures forming a plurality of electrodes and counter-electrodes on at least the first surface layer and the second surface layer to provide antimicrobial effects from the material structure itself and from a voltage generated from a deformation of the antimicrobial card.

In the absence of any specific clarification related to its express use in a particular context, where the terms " substantial " or " about " or "usually" in any grammatical form are used as modifiers in the present disclosure and any appended claims (e.g., to modify a structure, a dimension, a measurement, or some other characteristic), it is understood that the characteristic may vary by up to 30 percent.

The terms "include" and "comprise" as well as derivatives thereof, in all of their syntactic contexts, are to be construed without limitation in an open, inclusive sense, ( e.g. , " including, but not limited to " ). The term "or," is inclusive, meaning and / or. The phrases "associated with" and "associated therewith," as well as derivatives thereof, can be understood as meaning to include, be included within, interconnect with, contain, be contained within, connect to or with, couple to or with, be communicable with, cooperate with, interleave, juxtapose, be proximate to, be bound to or with, have, have a property of, or the like.

Unless the context requires otherwise, throughout the specification and claims which follow, the word "comprise" and variations thereof, such as, "comprises" and "comprising," are to be construed in an open, inclusive sense, e.g., "including, but not limited to."

Reference throughout this specification to "one embodiment" or "an embodiment" or "some embodiments" and variations thereof mean that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

As used in this specification and the appended claims, the singular forms "a," "an," and "the" include plural referents unless the content and context clearly dictates otherwise. It should also be noted that the conjunctive terms, "and" and "or" are generally employed in the broadest sense to include "and/or" unless the content and context clearly dictates inclusivity or exclusivity as the case may be. In addition, the composition of "and" and "or" when recited herein as "and/or" is intended to encompass an embodiment that includes all of the associated items or ideas and one or more other alternative embodiments that include fewer than all of the associated items or idea .

In the present disclosure, conjunctive lists make use of a comma, which may be known as an Oxford comma, a Harvard comma, a serial comma, or another like term. Such lists are intended to connect words, clauses or sentences such that the thing following the comma is also included in the list.

As the context may require in this disclosure, except as the context may dictate otherwise, the singular shall mean the plural and vice versa. All pronouns shall mean and include the person, entity, firm or corporation to which they relate. Also, the masculine shall mean the feminine and vice versa.

When so arranged as described herein, each computing device or processor may be transformed from a generic and unspecific computing device or processor to a combination device comprising hardware and software configured for a specific and particular purpose providing more than conventional functions and solving a particular technical problem with a particular technical solution. When so arranged as described herein, to the extent that any of the inventive concepts described herein are found by a body of competent adjudication to be subsumed in an abstract idea, the ordered combination of elements and limitations are expressly presented to provide a requisite inventive concept by transforming the abstract idea into a tangible and concrete practical application of that abstract idea.

The headings and Abstract of the Disclosure provided herein are for convenience only and do not limit or interpret the scope or meaning of the embodiments. The various embodiments described above can be combined to provide further embodiments. Aspects of the embodiments can be modified, if necessary to employ concepts of the various patents, application and publications to provide further embodiments.

**Claims**

1.   An antimicrobial deformable element, comprising:

    a core layer;
    at least a first surface layer made of piezoelectric materials applied above the core layer; and
    a doped diamond layer applied to at least the first surface layer, wherein the doped diamond layer forms a plurality of rough nanostructured structures forming a plurality of electrodes and counter-electrodes on at least the first surface layer to provide antimicrobial effects from the material structure itself and from a voltage generated from a deformation of the antimicrobial deformable element.

2.   The antimicrobial deformable element of claim 1, wherein the doped diamond layer forms the rough nanostructured structures having aspect ratios in the range of 1/5 - 1/10.

3.   The antimicrobial deformable element according to any of the previous claims 1, wherein the doped diamond layer has a significant roughness with regard to a periodicity of each of the rough nanostructured structures of the plurality of rough nanostructured structures to provide an antimicrobial property.

4.   The antimicrobial deformable element according to any of the previous claims, wherein the antimicrobial deformable element is a card further comprising at least a second surface layer made of piezoelectric materials applied below the core layer.

5.   The antimicrobial deformable element of claim 4, further comprising a doped diamond layer applied to at least the second surface layer, wherein the doped diamond layer applied to at least the second surface layer forms a plurality of rough nanostructured structures forming a plurality of electrodes and counter-electrodes on at least the second surface layer to provide antimicrobial effects from the material structure itself and from a voltage generated from a deformation of the antimicrobial deformable element.

6. The antimicrobial deformable element according to any of the previous claims, wherein the piezoelectric materials are made from one or more of PZT, AlN, ZnO, or PVDF.

7. The antimicrobial deformable element according to any of the previous claims, wherein the doped diamond layer is arranged and configured to exhibit great resistance to abrasion and high bioinertia.

8. The antimicrobial deformable element according to any of the previous claims, wherein the core layer is made from one or more of polycarbonate, styrene, polyvinyl chloride, or laminated polyvinyl chloride.

9. The antimicrobial deformable element according to any of the previous claims, wherein the core layer is made from an antimicrobial polymeric material including one or more polymers and one or more antimicrobial agents that affect the grown of bacterial, fungi, viruses or any combination thereof on the antimicrobial deformable element.

10. The antimicrobial deformable element according to any of the previous claims, wherein the doped diamond layer applied to at least the first surface layer serves as the plurality of electrodes and counter-electrodes according to an interdigitated comb structure having a space no greater than 5 μm between digits of the electrodes.

11. The antimicrobial deformable element according to any of the previous claims, wherein the doped diamond layer forms the plurality of rough nanostructured structures is made of a black silicon type of material.

12. The antimicrobial deformable element according to any of the previous claims, wherein the doped diamond layer applied to at least the first surface layer exhibits self-cleaning properties when soiled by a biological liquid, or one at least liquid containing electrolytes and when the voltage is generated from the deformation of the antimicrobial card due to activation of the piezoelectric materials passing a current.

13. The antimicrobial deformable element according to any of the previous claims, wherein the antimicrobial deformable element comprises an identification card, passport, a credit card, a debit card, an insurance card, a transaction card, ATM card, a Supermarket card, a club card, a lost and found key chain program card, a library card, a health club card, a membership card, a rental car loyalty programs card, a hotel loyalty programs card, a prepaid phone card, an access card, an identification card, a driver's license, a firearm license, a physical access security card, a mini-card, a security card, a stored value card, a vendor-specific card, a mobile phone cover, a mobile phone case, a laptop cover, a laptop case, a watch band, a temple for a pair of glasses, a frame for a pair of glasses, a handle for carry case, or any combination thereof.

14. The antimicrobial deformable element according to any of the previous claims, wherein the antimicrobial deformable element is an antimicrobial card, said antimicrobial card comprising a second surface layer made of piezoelectric materials applied below the core layer, the doped diamond layer being applied also to the second surface layer, the plurality of rough nanostructured structures forming a plurality of electrodes and counter-electrodes being formed also on the second surface layer.

15. An method of manufacturing an antimicrobial card, comprising:

providing a core layer;
applying a first surface layer made of piezoelectric materials above the core layer;
applying a second surface layer made of piezoelectric materials below the core layer; and
applying a doped diamond layer to at least the first surface layer and the second surface layer, wherein the doped diamond layer forms a plurality of rough nanostructured structures forming a plurality of electrodes and counter-electrodes on at least the first surface layer and the second surface layer to provide antimicrobial effects from the material structure itself and from a voltage generated from a deformation of the antimicrobial card.

**FIG. 1**

Black silicon

**FIG. 2**

Black silicon coated with a
conformal diamond deposit to
obtain black diamond

**FIG. 3**

Dead bacteria, pierced by the nanostructures of the black diamond

FIG. 4

Voltage generated by the piezoelectric layer of PZT as a function of the distance "d" between electrodes.

504          506
502
507
509

Plastic card

501a
508
501b

500
FIG. 5A

511
Bacteria
504a          502a
501a
d
501a

Piezoelectric layer          507

508

Piezoelectric Layer          509

- +   + -   - +   + -   - +

501b

500
FIG. 5B

802 provide a core layer;

804 apply a first surface layer made of piezoelectric materials above the core layer;

806 apply a second surface layer made of piezoelectric materials below the core layer;

808
apply a doped diamond layer to at least the first surface layer and the second surface layer, where the doped diamond layer forms a plurality of rough nanostructured structures forming a plurality of electrodes and counter-electrodes on at least the first surface layer and the second surface layer to provide antimicrobial effects from the material structure itself and from a voltage generated from a deformation of the antimicrobial card.

800

FIG. 6

**EP 4 505 874 A1**

Europäisches
Patentamt

European
Patent Office

Office européen
des brevets

# EUROPEAN SEARCH REPORT

Application Number

EP 23 31 5312

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | MAY P. W. ET AL: "Diamond-coated 'black silicon' as a promising material for high-surface-area electrochemical electrodes and antibacterial surfaces", JOURNAL OF MATERIALS CHEMISTRY. B, vol. 4, no. 34, 1 January 2016 (2016-01-01), pages 5737-5746, XP093105798, GB ISSN: 2050-750X, DOI: 10.1039/C6TB01774F * abstract * | 1-15 | INV. A01N25/08 A01N25/10 A01N25/34 A01P1/00 G06K19/06 A45C11/18 |
| Y | WO 2015/031956 A1 (UNIV SWINBURNE [AU]) 12 March 2015 (2015-03-12) * claims 1-24 * | 1-15 | |
| Y | WANG TAO ET AL: "Robust Biomimetic Hierarchical Diamond Architecture with a Self-Cleaning, Antibacterial, and Antibiofouling Surface", APPLIED MATERIALS & INTERFACES, vol. 12, no. 21, 27 May 2020 (2020-05-27), pages 24432-24441, XP055815388, US ISSN: 1944-8244, DOI: 10.1021/acsami.0c02460 Retrieved from the Internet: URL:https://pubs.acs.org/doi/pdf/10.1021/acsami.0c02460> * abstract * | 1-15 | |
| Y | WO 2021/104011 A1 (SHENZHEN INST OF ADV TECH CAS [CN]) 3 June 2021 (2021-06-03) * claims 1-10 * | 1-15 | TECHNICAL FIELDS SEARCHED (IPC) A01N G06K A45F A45C |
| Y | KR 2021 0021173 A (KRRI [KR]) 25 February 2021 (2021-02-25) * claims 1-16 * | 1-15 | |

-/--

The present search report has been drawn up for all claims

| Place of search | Date of completion of the search | Examiner |
|---|---|---|
| Munich | 21 December 2023 | Marie, Gérald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14

Europäisches
Patentamt

European
Patent Office

Office européen
des brevets

# EUROPEAN SEARCH REPORT

Application Number

EP 23 31 5312

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZUERBIG V. ET AL: "Transparent diamond electrodes for tunable micro-optical devices", DIAMOND AND RELATED MATERIALS, vol. 38, 1 September 2013 (2013-09-01), pages 101-103, XP093106050, NL ISSN: 0925-9635, DOI: 10.1016/j.diamond.2013.06.010 * abstract * * page 102, paragraph 2. * * figure 2 * | 1,3,6,7, 11,12 | |

TECHNICAL FIELDS
SEARCHED (IPC)

The present search report has been drawn up for all claims

| Place of search | Date of completion of the search | Examiner |
|---|---|---|
| Munich | 21 December 2023 | Marie, Gérald |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

15

## ANNEX TO THE EUROPEAN SEARCH REPORT
## ON EUROPEAN PATENT APPLICATION NO.

EP 23 31 5312

This annex lists the patent family members relating to the patent documents cited in the above-mentioned European search report.
The members are as contained in the European Patent Office EDP file on
The European Patent Office is in no way liable for these particulars which are merely given for the purpose of information.

21-12-2023

| Patent document cited in search report | Publication date | Patent family member(s) | | Publication date |
|---|---|---|---|---|
| WO 2015031956 A1 | 12-03-2015 | AU | 2014317814 A1 | 21-04-2016 |
| | | AU | 2019203551 A1 | 13-06-2019 |
| | | AU | 2021202421 A1 | 13-05-2021 |
| | | CA | 2923305 A1 | 12-03-2015 |
| | | EP | 3041787 A1 | 13-07-2016 |
| | | EP | 3632841 A1 | 08-04-2020 |
| | | ES | 2778173 T3 | 07-08-2020 |
| | | JP | 6454710 B2 | 16-01-2019 |
| | | JP | 2017503554 A | 02-02-2017 |
| | | KR | 20160085750 A | 18-07-2016 |
| | | KR | 20200021550 A | 28-02-2020 |
| | | SG | 10202000562T A | 30-03-2020 |
| | | SG | 11201601649Q A | 28-04-2016 |
| | | US | 2016212989 A1 | 28-07-2016 |
| | | US | 2020288707 A1 | 17-09-2020 |
| | | US | 2022015368 A1 | 20-01-2022 |
| | | WO | 2015031956 A1 | 12-03-2015 |
| | | ZA | 201602205 B | 25-05-2022 |
| | | ZA | 202004893 B | 31-08-2022 |
| WO 2021104011 A1 | 03-06-2021 | CN | 110947030 A | 03-04-2020 |
| | | WO | 2021104011 A1 | 03-06-2021 |
| KR 20210021173 A | 25-02-2021 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7851517 B, Lisa Marie Holmes